(19) Europäisches Patentamt
European Patent Office
Office européen des brevets

(11) **EP 4 769 785 A1**

(12) **EUROPEAN PATENT APPLICATION**
published in accordance with Art. 153(4) EPC

(43) Date of publication:
**01.07.2026 Bulletin 2026/27**

(21) Application number: **25852352.1**

(22) Date of filing: **16.07.2025**

(51) International Patent Classification (IPC):
**H01M 50/451** *(2021.01)*    **H01M 50/431** *(2021.01)*
**H01M 50/457** *(2021.01)*    **H01M 50/42** *(2021.01)*
**H01M 50/491** *(2021.01)*

(52) Cooperative Patent Classification (CPC):
**H01M 50/42; H01M 50/431; H01M 50/443;
H01M 50/446; H01M 50/451; H01M 50/457;
H01M 50/46; H01M 50/491;** Y02E 60/10

(86) International application number:
**PCT/KR2025/095457**

(87) International publication number:
**WO 2026/035128 (12.02.2026 Gazette 2026/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.08.2024 KR 20240104225**

(71) Applicant: **LG ENERGY SOLUTION, LTD.
Seoul 07335 (KR)**

(72) Inventors:
• **KIM, Ji Hyeon
Daejeon 34122 (KR)**

• **KIM, Min Ji
Daejeon 34122 (KR)**
• **HWANG, Seon Woo
Daejeon 34122 (KR)**
• **KA, Kyung Ryun
Daejeon 34122 (KR)**
• **KIM, Min Gyu
Daejeon 34122 (KR)**

(74) Representative: **Hoffmann Eitle
Patent- und Rechtsanwälte PartmbB
Arabellastraße 30
81925 München (DE)**

(54) **SEPARATOR FOR ELECTROCHEMICAL DEVICE, AND ELECTROCHEMICAL DEVICE COMPRISING SAME**

(57)    The present disclosure relates to a separator for an electrochemical device and an electrochemical device including the same, and more particularly, to a separator for an electrochemical device, wherein a coating layer provided on a porous polymer substrate includes inorganic particles, and the metal oxide in the inorganic particles has a controlled grain size, so that gas generation during the operation of an electrochemical device may be reduced, thereby improving the explosion safety of the electrochemical device, and an electrochemical device including the same.

[Fig. 1]

## Description

### Technical Field

The present disclosure claims the benefit of the filing date of Korean Patent Application No. 10-2024-0104225 filed with the Korean Intellectual Property Office on August 5, 2024, the entire contents of which are incorporated in the present disclosure. The present disclosure relates to a separator for an electrochemical device and an electrochemical device including the same, and more particularly, to a separator for an electrochemical device, wherein a coating layer provided on a porous polymer substrate includes inorganic particles, and the metal oxide in the inorganic particles has a controlled grain size, so that gas generation during the operation of an electrochemical device may be reduced, thereby improving the explosion safety of the electrochemical device, and an electrochemical device including the same.

### Background Art

Among the components of an electrochemical device, a separator is a porous polymer substrate located between a cathode and an anode and having a porous structure, and functions to isolate the cathode from the anode, prevent electrical short-circuiting between the two electrodes, and allow an electrolyte and ions to pass therethrough. Although the separator itself does not directly participate in electrochemical reactions, its physical properties, such as wettability with electrolyte, degree of porosity, and thermal shrinkage, affect the performance and safety of the electrochemical device.

Accordingly, to enhance the physical properties of the separator, various methods of adding a coating layer to a porous polymer substrate and adding various materials to the coating layer to change the properties of the coating layer have been attempted. For example, an inorganic material may be added to the coating layer to improve the mechanical strength of the separator, or an inorganic material or a hydrate may be added to the coating layer to improve the flame retardancy and heat resistance of the polymer substrate. Furthermore, an adhesive layer may be added to the coating layer, and various materials may be added to the adhesive layer to improve the physical properties of the adhesive layer.

The separator may be adhered to the electrodes through a lamination process, and a binder resin may be added to a slurry for the coating layer of the separator to ensure the adhesion between the electrodes and the separator.

Meanwhile, there was a problem in that moisture contained in an electrochemical device reacted with the electrolyte to generate a large amount of gas. Gas generated at room temperature or high temperature during the assembly and/or operation of an electrochemical device increases the resistance of the electrochemical device, reduces the output and capacity retention rate, thereby degrading the performance of the electrochemical devices and increases the risk of explosion due to expansion of the electrochemical device.

Therefore, there is a need to develop a technology that may reduce the amount of gas generated during the assembly and/or operation of an electrochemical device.

## DISCLOSURE

### Technical Problem

The technical problem to be solved by the present disclosure is to provide a separator for an electrochemical device, which is capable of reducing gas generated during the assembly and/or operation of the electrochemical device, and an electrochemical device including the same.

However, the problems to be solved by the present disclosure are not limited to the problem mentioned above, and other problems not mentioned will be clearly understood by those skilled in the art from the following description.

### Technical Solution

One embodiment of the present disclosure provides a separator for an electrochemical device, comprising: a porous polymer substrate; and a coating layer provided on at least one side of the porous polymer substrate and comprising inorganic particles and a first polymer binder, wherein the inorganic particles have a grain size of 2 $\mu$m or less.

According to one embodiment of the present disclosure, the inorganic particles may have an average particle size of 0.1 $\mu$m or more and 10.0 $\mu$m or less.

According to one embodiment of the present disclosure, the inorganic particles may have a dielectric constant of 10 or more.

According to one embodiment of the present disclosure, the inorganic particles may comprise a metal oxide represented by Formula 1 below.

$$[\text{Formula 1}] \quad A_xB_yO_z$$

wherein A may be one selected from the group consisting of Ba, Sr, Pb, Bi, Na, K, Ca, Y, Gd, La, Li, or combinations thereof, B may be one selected from the group consisting of Ti, Zr, Fe, Nb, Mn, Nb, Ta, or combinations thereof, $0 < x \leq 5$, $0 < y \leq 5$, and $0 < z \leq 5$.

According to one embodiment of the present disclosure, the content of the inorganic particles may be 70 parts by weight or more based on 100 parts by weight of the coating layer.

According to one embodiment of the present disclosure, the first polymer binder may be an acrylic resin.

According to one embodiment of the present disclosure, the separator may further comprise, on at least a portion of the coating layer, an adhesive layer comprising a second polymer binder.

According to one embodiment of the present disclosure, the second polymer binder may be in particle form.

One embodiment of the present disclosure provides an electrochemical device comprising: a cathode; an anode; and the above-described separator interposed between the cathode and the anode.

According to one embodiment of the present disclosure, the amount of gas generated after heating at 130°C for 1 hour may be 7,000 μL or less.

### Advantageous Effects

The separator for an electrochemical device according to one embodiment of the present disclosure may reduce gas generation during the assembly of an electrochemical device at a high temperature.

The separator for an electrochemical device according to one embodiment of the present disclosure may improve the ionic conductivity of an electrolyte of an electrochemical device.

The separator for an electrochemical device according to one embodiment of the present disclosure may increase the dielectric constant of the inorganic particles.

The electrochemical device according to one embodiment of the present disclosure may have an improved lifespan and also have improved explosion safety by preventing explosion due to gas generation.

### Brief Description of Drawings

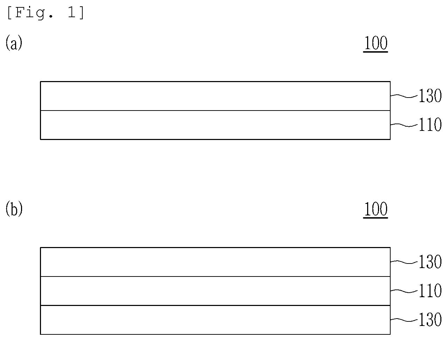

Fig. 1 is a schematic view of a separator for an electrochemical device according to one embodiment of the present disclosure. Specifically, (a) of Fig. 1 shows a separator for an electrochemical device in which a coating layer is provided on one side of a porous polymer substrate, and (b) of Fig. 1 shows a separator for an electrochemical device in which coating layers are provided on both sides of a porous polymer substrate.

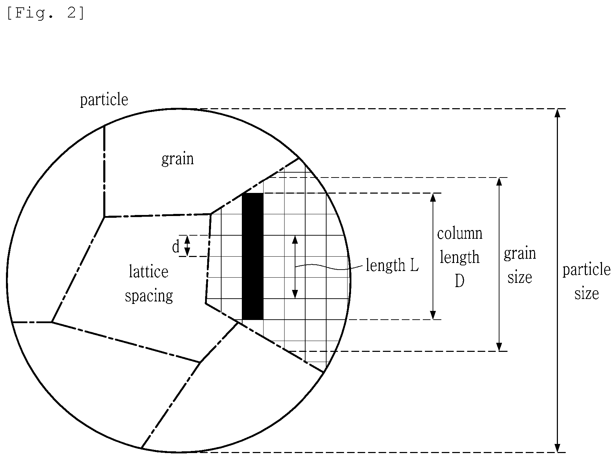

Fig. 2 is a schematic view illustrating an inorganic particle, grains, and crystals.

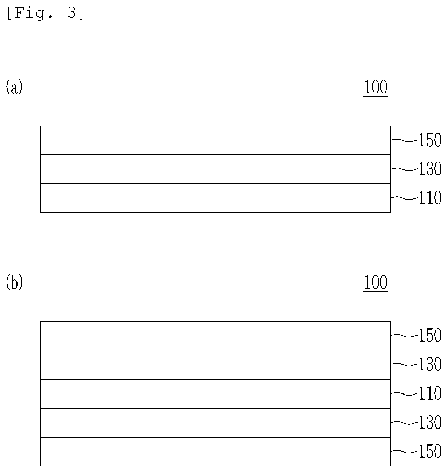

Fig. 3 is a schematic view of a separator for an electrochemical device according to one embodiment of the present disclosure. Specifically, (a) of Fig. 3 shows a separator for an electrochemical device in which a coating layer and an adhesive layer are provided on one side of a porous polymer substrate, and (b) of Fig. 3 shows a separator for an electrochemical device in which coating layers and adhesive layers are provided on both sides of a porous polymer substrate.

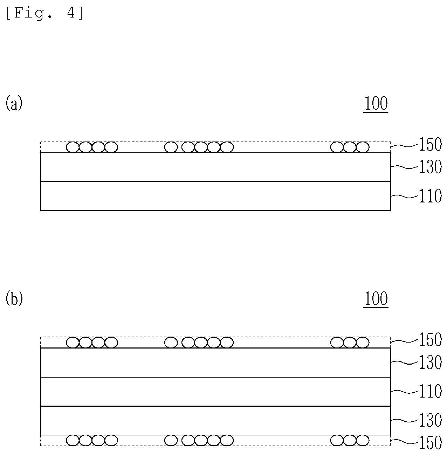

Fig. 4 is a schematic view of a separator for an electrochemical device according to one embodiment of the present disclosure. Specifically, (a) of Fig. 4 shows a separator for an electrochemical device in which a coating layer and an adhesive layer including a second polymer binder in particle form are provided on one side of a porous polymer substrate, and (b) of Fig. 4 shows a separator for an electrochemical device in which coating layers and adhesive layers are provided on both sides of a porous polymer substrate.

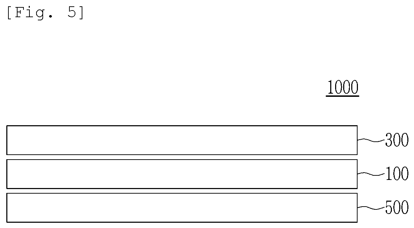

Fig. 5 is a schematic view of an electrochemical device according to one embodiment of the present disclosure.

### Best Mode

Hereinafter, various embodiments of the present disclosure will be described in detail so that those skilled in the art can easily carry out the present disclosure. However, these embodiments are provided for illustrative purposes only, and the scope of the present disclosure is not limited by the following contents.

Unless otherwise restricted, the detailed description defining or specifying the embodiments is applicable to all disclosures and is not limited to the description of particular disclosures. That is, the present disclosure also refers to combinations of the embodiments even if they are disclosed separately. Additionally, unless explicitly stated otherwise, singular forms include plural forms throughout the detailed description and the appended claims.

In the present specification, when any part is referred to as "including" any component, this means that the part does not exclude other component(s), but may further include other component(s), unless specifically stated otherwise.

However, unless explicitly stated otherwise, "consisting of", "including" or the like may include "essentially consisting of" and "consisting of".

The term "essentially including" as used herein may mean "including 70% or more", preferably "including 80% or more", most preferably "including 90% or more". If reference is made to the amount of a component in a mixture of materials, % is wt % relative to the total weight of the mixture. For example, a material essentially including polyethylene includes the polyethylene in an amount of at least 70 wt% based on the total weight of the material.

In the present specification, "A and/or B" means "A and B" or "A or B".

In the present specification, when it is referred to as being provided "on" a component, this means that the placement of other component(s) therebetween is not excluded, but other component(s) may be further disposed therebetween, unless specifically otherwise stated. However, unless explicitly stated otherwise, "on" encompasses the meaning of "directly on", that is, a situation in which no other component(s) may be further placed therebetween.

In the present specification, "having pores" or "porous" means that the relevant material includes a plurality of pores, so that a gaseous and/or liquid fluid may pass from one side to the other side of the relevant material by an interconnected structure between the pores.

As used herein, the separator has a porous characteristic by including a number of pores, and serves as a porous ion-conducting barrier that allows ions to pass therethrough while blocking electrical contact between an anode and a cathode in an electrochemical device.

The drawings attached to the present specification illustrate preferred embodiments of the disclosure and serve to explain the principles of the present disclosure together with the description of the disclosure, but the scope of the disclosure is not limited thereto. Meanwhile, the shapes, sizes, scales, or ratios of elements in the drawings attached to the present specification may be exaggerated to emphasize a clearer description.

Hereinafter, the present disclosure will be described in more detail.

One embodiment of the present disclosure provides a separator for an electrochemical device, including: a porous polymer substrate; and a coating layer provided on at least one side of the porous polymer substrate and including inorganic particles and a first polymer binder, wherein the inorganic particles have a grain size of 2 $\mu$m or less.

The separator for an electrochemical device according to one embodiment of the present disclosure may reduce gas generation during the assembly of an electrochemical device at a high temperature. Furthermore, the separator for an electrochemical device according to one embodiment of the present disclosure may improve the ionic conductivity of an electrolyte of an electrochemical device. In addition, the separator for an electrochemical device according to one embodiment of the present disclosure may increase the dielectric constant of the inorganic particles.

Fig. 1 is a schematic view of a separator according to one embodiment of the present disclosure. The separator for an electrochemical device according to one embodiment of the present disclosure will be described in detail with reference to Fig. 1.

According to one embodiment of the present disclosure, a separator 100 for an electrochemical device includes a porous polymer substrate. As the separator 100 for an electrochemical device includes the porous polymer substrate 110 as described above, it allows lithium ions to pass therethrough while blocking electrical contact, and may provide a shutdown function at an appropriate temperature.

According to one embodiment of the present disclosure, the porous polymer substrate 110 may be manufactured using a polyolefin-based resin as a base resin. Examples of the polyolefin-based resin include polyethylene, polypropylene, and polypentene, one or more of which may be included. A porous separator, i.e., a separator having a large number of pores, manufactured using such a polyolefin-based resin as a base resin, may provide a shutdown function at an appropriate temperature.

According to one embodiment of the present disclosure, the weight-average molecular weight of the polyolefin-based resin may be 500,000 or more and 1.5 million or less. By controlling the weight average molecular weight of the polyolefin-based resin within the above-described range, the compression resistance of the separator may be improved. Furthermore, when a mixture of different polyolefin-based resins is used or a separator is formed to have a multilayer structure using different polyolefin-based resins, the weight-average molecular weight of the polyolefin-based resins may be calculated by adding the weight-average molecular weight depending on the content ratio of each polyolefin resin.

In the present specification, the weight-average molecular weight (Mw) may be measured by gel permeation chromatography (GPC, PL GPC220, Agilent Technologies), and the measurement conditions may be set as follows.

- Column: PL Olexis (Polymer Laboratories)
- Solvent: Trichlorobenzene (TCB)
- Flow rate: 1.0 ml/min
- Sample concentration: 1.0 mg/ml
- Injection volume: 200 $\mu$L
- Column temperature: 160°C
- Detector: Agilent High Temperature RI detector

- Standard: Polystyrene (corrected with tertiary function)

According to one embodiment of the present disclosure, the porous polymer substrate 110 may be manufactured by a method (wet method) of mixing a polyolefin-based resin with a plasticizer (diluent) at a high temperature to form a single phase, subjecting the polymer material and the plasticizer to phase separation during a cooling process, and then extracting the plasticizer to form pores, followed by stretching and heat-setting. In addition, the porous polymer substrate formed using the polyolefin-based resin may have a core portion composed of a mixture of polyethylene and polypropylene and a polyethylene skin portion laminated on both sides of the core portion.

According to one embodiment of the present disclosure, the average pore size and the maximum pore size of the porous polymer substrate 110 may be easily controlled by a person skilled in the art within the scope of the present disclosure by controlling the mixing ratio of the plasticizer, the stretching ratio, the heat-setting treatment temperature, and the like.

According to one embodiment of the present disclosure, the thickness of the porous polymer substrate may be 1 $\mu$m or more and 50 $\mu$m or less. Specifically, the thickness of the porous polymer substrate may be 2 $\mu$m or more and 45 $\mu$m or less, 3 $\mu$m or more and 40 $\mu$m or less, 4 $\mu$m or more and 35 $\mu$m or less, 5 $\mu$m or more and 30 $\mu$m or less, 6 $\mu$m or more and 25 $\mu$m or less, 7 $\mu$m or more and 20 $\mu$m or less, or 8 $\mu$m or more and 15 $\mu$m or less. By controlling the thickness of the porous polymer substrate within the above-described range, the energy density of the battery may be improved.

In one embodiment of the present disclosure, the thickness of the porous polymer substrate and/or the coating layer may be measured using a contact-type thickness gauge. The contact-type thickness gauge may be, for example, Mitutoyo VL-50S-B.

According to one embodiment of the present disclosure, the porosity of the porous polymer substrate may be 10 vol% or more and 90 vol% or less. Specifically, the porosity of the porous polymer substrate may be 10 vol% or more and 90 vol% or less, 20 vol% or more and 80 vol% or less, 30 vol% or more and 70 vol% or less, or 40 vol% or more and 60 vol% or less. By controlling the porosity of the porous polymer substrate within the above-described range, the permeability of lithium ions through the separator may be controlled.

In the present specification, "porosity" means the ratio of the volume occupied by pores to the total volume, is given in vol%, and may be used interchangeably with terms such as porosity rate and porosity.

In the present specification, the porosity may correspond to a value obtained by subtracting the volume converted from the weight and density of each component of the porous polymer substrate 110 and/or coating layer 130 from the volume calculated using the thickness, width and length of the porous polymer substrate 110 and/or coating layer 130.

In one embodiment of the present disclosure, the porosity and pore size of the porous polymer substrate 110 and/or the coating layer 130 may be measured by a BET 6-point method according to a nitrogen gas adsorption-flow method using a scanning electron microscope (SEM) image, a mercury porosimeter, a capillary flow porometer (iCFP-1100 by poretech), or a porosimetry analyzer (Belsorp-II mini, Bell Japan Inc.). At this time, it may be advantageous to use the capillary flow porometer, and the measurement may be performed according to ASTM-F316.

According to one embodiment of the present disclosure, the surface of the coating layer may have pores uniformly distributed thereon. The uniform distribution may realize a constant pore size and shape over the entire surface when an electron image of 60 $\mu$m x 60 $\mu$m is taken, as measured by SEM. The pore size on the surface of the coating layer may be in the range of 0.001 $\mu$m to 30 $\mu$m, or may be 30 $\mu$m or less, 25 $\mu$m or less, 20 $\mu$m or less, 15 $\mu$m or less, 10 $\mu$m or less, 5 $\mu$m or less, 3 $\mu$m or less, or 2 $\mu$m or less, and may be 0.001 $\mu$m or more, or 0.01 $\mu$m or more. The pore size on the surface of the coating layer may be measured by SEM by taking an electron image of 60 $\mu$m x 60 $\mu$m. Alternatively, the pore size may be measured as known to those skilled in the art, as described above. The uniform distribution may indicate a regular pattern or spacing of pores over the entire surface when an electron image of 60 $\mu$m X 60 $\mu$m is taken, as measured by SEM.

According to one embodiment of the present disclosure, the separator for an electrochemical device includes a coating layer provided on at least one side of the porous polymer substrate. (a) of Fig. 1 shows a separator for an electrochemical device in which a coating layer is provided on one surface of a porous polymer substrate, and (b) of Fig. 1 shows a separator for an electrochemical device in which coating layers are provided on both surfaces of a porous polymer substrate. Specifically, as shown in FIG. 1, the separator 100 for an electrochemical device includes a coating layer 130 provided on one or both sides of the porous polymer substrate 110. As the separator 100 for an electrochemical device includes the coating layer 130 provided on at least one side of the porous polymer substrate 110 as described above, the heat resistance of the separator may be improved, the mechanical properties may be improved, and an electrical short circuit between the electrodes may be prevented from being caused by shrinkage of the separator at high temperatures.

According to one embodiment of the present disclosure, the coating layer includes inorganic particles and a first polymer binder. As the coating layer includes the inorganic particles and the first polymer binder as described above, the porosity of the coating layer may be improved, and at the same time, gas generated during the assembly and operation of the electrochemical device may be reduced.

According to one embodiment of the present disclosure, the coating layer 130 may include a plurality of pores.

Specifically, the coating layer may be a porous coating layer. More specifically, the coating layer may be a porous coating layer including a plurality of pores therein. As the coating layer includes a plurality of pores as described above, the coating layer allows lithium ions to pass and current to flow therethrough while physically blocking the negative electrode and the positive electrode.

According to one embodiment of the present disclosure, the coating layer 130 may be formed by binding the inorganic particles by the first polymer binder, followed by integration into the coating layer. The pores in the coating layer 130 may originate from an interstitial volume, which is an empty space between the inorganic particles.

According to one embodiment of the present disclosure, the coating layer 130 may be formed to a thickness of 1 $\mu$m to 20 $\mu$m on any one side of the porous polymer substrate 110, without being particularly limited thereto. The thickness of the coating layer may be controlled within an appropriate range by those skilled in the art in terms of heat resistance or electrical resistance.

According to one embodiment of the present disclosure, the grain size of the inorganic particles is 2 $\mu$m or less. Specifically, the grain size of the inorganic particles may be more than 0 $\mu$m, 0.005 $\mu$m or more, 0.01 $\mu$m or more, 0.05 $\mu$m or more, 0.1 $\mu$m or more, 0.25 $\mu$m or more, 0.5 $\mu$m or more, 0.7 $\mu$m or more, 0.8 $\mu$m or more, 1.1 $\mu$m or more, or 1.2 $\mu$m or more, and may be 1.5 $\mu$m or less, 1.2 $\mu$m or less, 0.9 $\mu$m or less, 0.8 $\mu$m or less, 0.6 $\mu$m or less, 0.5 $\mu$m or less, 0.2 $\mu$m or less, 0.1 $\mu$m or less, 0.02 $\mu$m or less, or 0.01 $\mu$m or less. By controlling the grain size of the inorganic particles within the above-described range, the dielectric constant may be increased, and gas generation during the assembly and/or operation of the electrochemical device may be reduced.

In the present specification, the grain size may mean something different from the particle size and crystal size of an inorganic particle. Fig. 2 is a schematic view illustrating an inorganic particle, grains, and crystals. Referring to Fig. 2, grains may mean crystal regions having the same crystal orientation. That is, an inorganic particle may be composed of the grains. The grain size refers to the size of the grain, and may mean something different from the particle size and crystal size of the inorganic particle.

In the present specification, the "grain size" may be measured by analyzing XRD data, obtained by X-ray diffraction analysis of inorganic particles, which are the powder to be measured, using the Rietveld refinement method. At this time, the X-ray diffraction analysis may be performed using a Bruker D8 Endeavor equipped with a LynxEye XE-T-position sensitive detector (light source: Cu-K$\alpha$, $\lambda$ = 1.54 Å), by placing a sample in a groove of a general powder holder, smoothing the surface of the sample using a slide glass, filling so that the height of the sample matches the edge of the holder, and then performing measurements on a region with FDS 0.5° and 2$\theta$ = 10° to 90° under the conditions of step size = 0.016° and total scan time = about 1/20 minute. Specifically, in grain size analysis, instrumental broadening may employ the fundamental parameter approach (FPA) as implemented in the Bruker TOPAS program, and the entire peaks in the measurement range may be used during fitting. The peak shape may be fitted using only the Lorenzian contribution as the first principle (FP) among the peak types available in TOPAS.

According to one embodiment of the present disclosure, the average particle size ($D_{50}$) of the inorganic particles is not particularly limited, but is preferably in the range of 0.1 $\mu$m or more and 10 $\mu$m or less for the formation of the coating layer 130 with a uniform thickness and an appropriate porosity. Specifically, the average particle size ($D_{50}$) of the inorganic particles may be 0.5 $\mu$m or more and 9.0 $\mu$m or less, 1.0 $\mu$m or more and 8.0 $\mu$m or less, 2.0 $\mu$m or more and 7.0 $\mu$m or less, or 3.0 $\mu$m or more and 6.0 $\mu$m or less. By controlling the average particle size ($D_{50}$) of the inorganic particles within the above-described range, the dispersibility of the inorganic particles in a slurry prepared for forming the coating layer may be prevented from being reduced, and the thickness of the formed coating layer may be reduced.

According to one embodiment of the present disclosure, the dielectric constant of the inorganic particles may be 10 or more. Specifically, the dielectric constant of the inorganic particles may be 50 or more and 5,500 or less, 60 or more and 5,300 or less, 400 or more and 4,500 or less, 500 or more and 4,100 or less, 1,300 or more and 2,500 or less, or 1,500 or more and 2,300 or less. By controlling the dielectric constant of the inorganic particles within the above-described range, the ionic conductivity of the electrolyte may be improved, and gas generation during the assembly and/or operation of the electrochemical device may be reduced.

In the present specification, the dielectric constant may be measured using ASTM D 150 - Standard Test Methods. Specifically, the dielectric constant may be measured using the following method. A sample is prepared by forming a pellet having a diameter of 100 mm and a thickness of 4 mm through high-pressure compression molding, and the dielectric constant of the sample is measured using ASTM D 150 - Standard Test Methods.

According to one embodiment of the present disclosure, the inorganic particles may include a metal oxide represented by Formula 1 below.

[Formula 1]     $A_x B_y O_z$

wherein A may be one selected from the group consisting of Ba, Sr, Pb, Bi, Na, K, Ca, Y, Gd, La, Li, or combinations thereof, B may be one selected from the group consisting of Ti, Zr, Fe, Nb, Mn, Nb, Ta, or combinations thereof, $0 < x \leq 5$, $0 < y \leq 5$, and $0 < z \leq 5$. Specifically, A may be Ba, Sr, Pb, Bi, Na/Bi, K/Na, Ca, Y, Gd, La, or Li, and B may be Ti, Zr/Ti, Fe, Nb, Mn, Nb, or Ta. More specifically, the metal oxide may be $LiNdO_3$, $SrTiO_3$ or $BaTiO_3$. By selecting the metal oxide as described above, a high dielectric constant may be achieved, and gas generation during the assembly and/or operation of the electrochemical device may be reduced.

According to one embodiment of the present disclosure, the coating layer may further include other inorganic particles in addition to the inorganic particles containing the metal oxide. As the coating layer further including separate inorganic particles as described above, the heat resistance of the separator may be improved, the mechanical properties thereof may be improved, an electrical short circuit between the electrodes may be prevented from being caused by shrinkage of the separator at high temperatures, and pores may be formed in the coating layer.

According to one embodiment of the present disclosure, the inorganic particles additionally included in the coating layer 130 are not particularly limited as long as they are electrochemically stable. That is, other inorganic particles other than the inorganic particles containing the metal oxide that may be used in one embodiment of the present disclosure are not particularly limited as long as they do not undergo oxidation and/or reduction reactions within the operating voltage range (e.g., 0 V to 5 V versus $Li/Li^+$) of an electrochemical device to which they are applied.

According to one embodiment of the present disclosure, examples of the inorganic particles other than the inorganic particles containing the metal oxide include $Pb(Zr,Ti)O_3$ (PZT), $Pb_{1-x}La_xZr_{1-y}Ti_yo_3$ (PLZT, 0<x<1, 0<y<1), $Pb(Mg_{1/3}Nb_{2/3})O_3$-$PbTiO_3$ (PMN-PT), hafnia ($HfO_2$), $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $SiC$, $Al(OH)_3$, $TiO_2$, aluminum peroxides, zinc-tin hydroxide ($ZnSn(OH)_6$), zinc-tin oxides ($Zn_2SnO_4$, $ZnSnO_3$), antimony trioxide ($Sb_2O_3$), antimony tetroxide ($Sb_2O_4$), and antimony pentoxide ($Sb_2O_5$), one or two or more of which may be included.

In the present specification, "$D_{30}$ particle size" means the particle size at 50% of the particle number cumulative distribution depending on particle size. The particle size may be measured using a laser diffraction method. Specifically, the particle size distribution is calculated by dispersing the powder to be measured in a dispersion medium, and then introducing the dispersion into a commercially available laser diffraction particle size analyzer (e.g., Microtrac S3500) and measuring the particle size-dependent difference in diffraction patterns when the particles pass through the laser beam. By calculating the particle size at 50% of the particle size cumulative distribution depending on particle size in the analyzer, the $D_{50}$ particle size may be measured. "D50 particle size" may be measured according to ISO 13320-1 (Particle Size Analysis - Laser Diffraction Methods).

According to one embodiment of the present disclosure, the content of the inorganic particles may be 70 parts by weight or more based on 100 parts by weight of the coating layer. Specifically, the content of the inorganic particles may be more than 70 parts by weight and less than 100 parts by weight, 72 parts by weight or more and 99 parts by weight or less, 74 parts by weight or more and 98 parts by weight or less, 76 parts by weight or more and 97 parts by weight or less, 78 parts by weight or more and 96 parts by weight or less, 80 parts by weight or more and 95 parts by weight or less, 81 parts by weight or more and 94 parts by weight or less, 82 parts by weight or more and 93 parts by weight or less, 83 parts by weight or more and 92 parts by weight or less, 84 parts by weight or more and 91 parts by weight or less, 85 parts by weight or more and 90 parts by weight or less, 86 parts by weight or more and 89 parts by weight or less, or 87 parts by weight or more and 88 parts by weight or less, based on 100 parts by weight of the coating layer 130. By controlling the content of the inorganic particles within the above-described range, the heat resistance of the separator may be improved.

According to one embodiment of the present disclosure, the first polymer binder may be an acrylic resin. By selecting the acrylic resin as the material of the first polymer binder particles as described above, the porosity of the separator may be maintained, a battery may be easily manufactured by improving the adhesion between the electrodes and the separator in the battery lamination process, and the stacking process may be stably performed.

According to one embodiment of the present disclosure, the acrylic resin may be a polymer containing a carboxylic acid ester as a repeating unit, and may preferably be a (meth)acrylic acid ester or an acrylic-styrene copolymer.

According to one embodiment of the present disclosure, specific examples of the (meth)acrylic acid ester include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth)acrylate, allyl (meth)acrylate, and ethylene di(meth)acrylate, one or more of which may be used. Thereamong, at least one selected from methyl (meth)acrylate, ethyl (meth)acrylate, and 2-ethylhexyl (meth)acrylate is preferable, and methyl (meth)acrylate is particularly preferable.

According to one embodiment of the present disclosure, the acrylic-styrene copolymer may include an acrylic binder, wherein the acrylic binder may be a polyacrylate-based binder. For example, the acrylic binder may be at least one selected from the group consisting of styrene-butadiene rubber, nitrile-butadiene rubber, acrylonitrile-butadiene rubber, acrylonitrile-butadiene-styrene rubber, and acrylate-based polymers, and specifically, may be an acrylate-containing copolymer.

According to one embodiment of the present disclosure, the glass transition temperature (Tg) of the first polymer binder may be 20°C or more and 60°C or less. Specifically, the glass transition temperature (Tg) of the first polymer binder may be 22°C or more and 58°C or less, 24°C or more and 56°C or less, 26°C or more and 54°C or less, 28°C or more and 52°C or less, 30°C or more and 50°C or less, 32°C or more and 48°C or less, 34°C or more and 46°C or less, 36°C or more and 44°C or less, or 38°C or more and 42°C or less. By controlling the glass transition temperature (Tg) of the first polymer binder within the above-described range, the viscosity of a slurry for forming the coating layer may be controlled, thereby improving the convenience of manufacturing an electrochemical device.

According to one embodiment of the present disclosure, the first polymer binder may be in solution form. In the present specification, "solution form" may mean that the first polymer binder is dissolved in a solvent or dispersion medium, which is used to prepare a slurry, or in an electrolyte, and thus does not maintain the shape of particles, and may mean that the solubility in the solvent or dispersion medium, which is used to prepare the slurry, or in the electrolyte, is more than 50% (w/w). By selecting the first polymer binder in solution form as described above, the coating layer included in the separator may be formed with a uniform thickness.

According to one embodiment of the present disclosure, the first polymer binder may be in particle form. In the present specification, "particle form" may mean that the first polymer binder maintains the shape of particles without being dissolved in a solvent or dispersion medium, which is used to prepare a slurry, or in an electrolyte, and may mean that the solubility in the solvent or dispersion medium, which is used to prepare the slurry, or in the electrolyte, is 50% (w/w) or less. By selecting the first polymer binder in particle form as described above, the porosity of the coating layer included in the separator may be improved.

According to one embodiment of the present disclosure, the average particle size ($D_{50}$) of the first polymer binder is not particularly limited, but is preferably in the range of 0.1 $\mu$m or more and 1 $\mu$m or less for the formation of the coating layer 130 with a uniform thickness and an appropriate porosity. Specifically, the average particle size ($D_{50}$) of the first polymer binder may be 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. By controlling the average particle size ($D_{50}$) of the first polymer binder within the above-described range, the dispersibility in a slurry prepared for forming the coating layer may be improved, and the thickness of the formed coating layer may be reduced.

According to one embodiment of the present disclosure, the first polymer binder may be a polyvinylidene-based resin. Specifically, according to one embodiment of the present disclosure, the polyvinylidene-based resin may be a copolymer of polyvinylidene fluoride (PVdF) and hexafluoropropylene (HFP). By selecting the polyvinylidene-based resin as the first polymer binder as described above, the porosity of the separator may be maintained, and the adhesion thereof may be maintained even if the coating layer is wetted by an electrolyte after activation of an electrochemical device. Furthermore, the stiffness of the electrochemical device may be improved, and bending of the separator may be prevented.

According to one embodiment of the present disclosure, the polyvinylidene-based binder may be a water-soluble resin. Specifically, by selecting the water-soluble resin as the polyvinylidene-based resin, pollutant emission during the manufacturing of the separator may be minimized, thereby reducing the manufacturing cost of the electrochemical device.

In the present specification, "water-soluble" may mean dissolved in water, and the water-soluble may mean that the solubility in water is more than 50% (w/w).

According to one embodiment of the present disclosure, the first polymer binder may be a polyvinylidene-based resin having a hexafluoropropylene (HFP) content of 1 wt% or more and 50 wt% or less. Specifically, the first polymer binder may be a polyvinylidene-based resin having a hexafluoropropylene (HFP) content of 1 wt% or more and 50 wt% or less, 2 wt% or more and 45 wt% or less, 3 wt% or more and 40 wt% or less, 4 wt% or more and 35 wt% or less, 5 wt% or more and 30 wt% or less, 7 wt% or more and 25 wt% or less, or 10 wt% or more and 20 wt% or less. By selecting a polyvinylidene-based resin having a hexafluoropropylene content of 1 wt% or more and 50 wt% or less as the first polymer binder as described above, the porosity of the separator may be maintained, and the adhesion thereof may be maintained even if the coating layer is wetted by an electrolyte after activation of an electrochemical device. In the present specification, the degree of substitution of the polyvinylidene-based resin may mean the weight proportion of hexafluoropropylene contained.

According to one embodiment of the present disclosure, the total content of the first polymer binder may be 30 parts by weight or less based on 100 parts by weight of the coating layer 130. Specifically, the total content of the first polymer binder may be more than 0 parts by weight and 30 parts by weight or less, 1 part by weight or more and 27 parts by weight or less, 2 parts by weight or more and 25 parts by weight or less, 3 parts by weight or more and 22 parts by weight or less, 4 parts by weight or more and 21 parts by weight or less, 5 parts by weight or more and 20 parts by weight or less, 6 parts by weight or more and 19 parts by weight or less, 7 parts by weight or more and 18 parts by weight or less, 8 parts by weight or more and 17 parts by weight or less, 9 parts by weight or more and 16 parts by weight or less, 10 parts by weight or more and 15 parts by weight or less, 11 parts by weight or more and 14 parts by weight or less, or 12 parts by weight or more and 13 parts by weight or less, based on 100 parts by weight of the coating layer 130. By controlling the total content of the first polymer binder within the above-described range, the ease of assembly in the electrode assembly process may be improved.

According to one embodiment of the present disclosure, the porosity of the coating layer 130 may be 30 vol% or more. Specifically, the porosity of the coating layer 130 may be 30 vol% or more and 70 vol% or less, 32 vol% or more and 68 vol% or less, 34 vol% or more and 66 vol% or less, 36 vol% or more and 64 vol% or less, 38 vol% or more and 62 vol% or less, 40 vol% or more and 60 vol% or less, 42 vol% or more and 58 vol% or less, 44 vol% or more and 56 vol% or less, 46 vol% or more and 54 vol% or less, or 48 vol% or more and 52 vol% or less. By controlling the porosity of the coating layer 130 within the above-described range, the movement of ions in the separator may be maintained, and an increase in the resistance of the separator may be prevented. By controlling the porosity of the coating layer within the above-described range, mechanical properties that may withstand the pressing process for bonding with the electrodes may be ensured, adhesion may be ensured because the surface opening ratio is not excessively high, and ion permeability may be improved.

According to one embodiment of the present disclosure, the separator may further include, on at least a portion of the coating layer, an adhesive layer including a second polymer binder. Fig. 3 is a schematic view of a separator for an electrochemical device according to one embodiment of the present disclosure. Specifically, (a) of Fig. 3 shows a separator for an electrochemical device in which a coating layer and an adhesive layer are provided on one side of a porous polymer substrate, and (b) of Fig. 3 shows a separator for an electrochemical device in which coating layers and adhesive layers are provided on both sides of a porous polymer substrate. As shown in Fig. 3, the adhesive layer may be provided only on one side of the separator, and the adhesive layers may be provided on both sides of the separator. Fig. 4 is a schematic view of a separator for an electrochemical device according to one embodiment of the present disclosure. Specifically, (a) of Fig. 4 shows a separator for an electrochemical device in which a coating layer and an adhesive layer including a second polymer binder in particle form are provided on one side of a porous polymer substrate, and (b) of Fig. 4 shows a separator for an electrochemical device in which coating layers and adhesive layers are provided on both sides of a porous polymer substrate. Specifically, as shown in Fig. 4, the adhesive layer may be provided on the entire coating layer or on at least a portion of the coating layer. More specifically, the area on which the adhesive layer is provided may be 1% or more and 99% or less, 5% or more and 95% or less, 10% or more and 90% or less, 15% or more and 85% or less, 20% or more and 80% or less, 25% or more and 75% or less, or 30% or more and 70% or less, based on the total area of the coating area being taken as 100%. By including the adhesive layer on the coating layer as described above, dry adhesion and wet adhesion to the electrodes may be improved.

According to one embodiment of the present disclosure, the second polymer binder may be in particle form, solution form, or a combination thereof. By selecting the second polymer binder from those described above, dry adhesion and wet adhesion to the electrodes may be improved.

According to one embodiment of the present disclosure, the second polymer binder may be in particle form. By selecting the second polymer binder in particle form as described above, the porosity of the separator may be maintained at a high level while improving the adhesion of the separator to the electrodes.

According to one embodiment of the present disclosure, the first polymer binder and the second polymer binder may be the same as or different from each other. By selecting the first polymer binder and the second polymer binder as described above, the adhesion between the coating layer and the adhesive layer may be controlled, the second polymer binder may be prevented from being dissolved in the electrolyte, and the resistance of the electrochemical device may be minimized.

According to one embodiment of the present disclosure, the second polymer binder may be provided on a portion of the coating layer by a spraying method, a bar coating method, a spin coating method, or a dip coating method. By selecting a method for providing the second polymer binder from those described above, the second polymer binder may be easily positioned on the coating layer.

One embodiment of the present disclosure provides a method for manufacturing a separator for an electrochemical device, including: a step (S10) of mixing a slurry for a coating layer 130 containing a first polymer binder and inorganic particles; a step (S30) of applying the slurry for a coating layer onto at least one side of a porous polymer substrate 110; and a step (S50) of drying the slurry for a coating layer to form the coating layer 130.

According to the method for manufacturing a separator for an electrochemical device according to one embodiment of the present disclosure, it is possible to maintain adhesion during a process of lamination with electrodes, and maintain adhesion after activation of the electrochemical device, thereby improving stiffness or preventing bending of a pouch-type electrochemical device.

According to one embodiment of the present disclosure, the slurry for a coating layer may be maintained in a wet state so that at least two layers are formed on the porous polymer substrate by gravity before drying for forming the coating layer.

According to one embodiment of the present disclosure, after the slurry for a coating layer is applied to one side of the porous polymer substrate 110 (S30), the slurry may be maintained in a wet state for at least 1 minute to achieve phase separation of the coating layer by gravity.

According to one embodiment of the present disclosure, phase separation by gravity may mean that the slurry is separated to include one or more phases due to a difference in density between the first polymer binder and the inorganic particles.

According to one embodiment of the present disclosure, the inorganic particles may have a higher density than the first polymer binder, so that the inorganic particles may form a bottom phase, and the first polymer binder particles may form a layer on the bottom. Therefore, phase separation may mean that the phases are clearly separated, and a concentration gradient of the first polymer binder or the inorganic particles may be formed between the upper and lower portions.

According to one embodiment of the present disclosure, the method for manufacturing a separator 100 for an electrochemical device includes a step (S10) of mixing a slurry for a coating layer containing a first polymer binder and inorganic particles. By including the step (S10) of mixing a slurry for a coating layer as described above, a coating layer may be easily formed on the separator.

According to one embodiment of the present disclosure, the slurry for a coating layer may be provided by preparing a polymer emulsion by dispersing a first polymer binder in water which is a suitable dispersion medium. By providing the slurry for a coating layer by preparing a polymer emulsion by dispersing a first polymer binder in water which is a suitable dispersion medium as described above, the generation of contaminants during the preparation process may be minimized. In the present specification, the dispersion medium may refer to a solvent that is used in the process of preparing the slurry.

According to one embodiment of the present disclosure, the inorganic particles may be added to and dispersed in the polymer emulsion. The content ratio between the inorganic particles and the polymer binder is as described above, and is appropriately adjusted in consideration of the thickness, pore size, and porosity of the finally formed coating layer according to one embodiment of the present disclosure.

According to one embodiment of the present disclosure, the slurry for a coating layer may be prepared by dispersing the first polymer binder and the inorganic particles in water as a dispersion medium. Specifically, the slurry for a coating layer may be prepared by dispersing the first polymer binder, the inorganic particles, and a dispersant in water as a dispersion medium.

According to one embodiment of the present disclosure, the content of the dispersant may be 0.1 parts by weight or more and 3.0 parts by weight or less based on 100 parts by weight of the slurry for a coating layer. Specifically, the content of the dispersant may be 2.0 parts by weight or more and 3.0 parts by weight or less based on 100 parts by weight of the slurry for a coating layer. By controlling the content of the dispersant as described above, the dispersibility of each component in the slurry for a coating layer may be improved.

According to one embodiment of the present disclosure, the dispersant may be polyacrylic acid, without being limited thereto, and a commonly used dispersant may be selected and used.

According to one embodiment of the present disclosure, the solid content of the slurry for a coating layer may be 10 wt% or more and 50 wt% or less. Specifically, the solid content of the slurry for a coating layer may be 15 wt% or more and 40 wt% or less, 20 wt% or more and 35 wt% or less, or 15 wt% or more and 40 wt% or less. By controlling the solid content of the slurry for a coating layer within the above-described range, the workability of the process of forming the coating layer may be improved.

According to one embodiment of the present disclosure, the method for manufacturing the separator 100 for an electrochemical device includes a step (S30) of applying the slurry for a coating layer onto at least one side of the porous polymer substrate 110. By including the step of applying the slurry for a coating layer onto at least one side of the porous polymer substrate 110 as described above, the coating layer 130 may be formed by single application, an excessive amount of the inorganic particles may be present in a portion close to the porous polymer substrate 110 due to the separation of the slurry for a coating layer into the inorganic particles and the first polymer binder, and an excessive amount of the first polymer binder may be present in a portion far from and facing the porous polymer substrate 110, thereby improving adhesion to the electrodes and improving the porosity of the separator.

In the present specification, the presence of the excessive amount may mean a content exceeding 50 wt% in the relevant portion, and the portion close to and the portion far from the porous polymer substrate 110 may be distinguished from each other based on an imaginary line that accounts for 1/2 of the thickness of the coating layer.

According to one embodiment of the present disclosure, the method of applying the slurry for a coating layer to the surface of the porous polymer substrate 110 is not particularly limited to any one method, and a conventional method known in the art may be used. For example, various methods such as bar coating, dip coating, die coating, roll coating, comma coating, or a combination thereof may be used. More specifically, the method of applying the slurry for a coating layer to the surface of the porous polymer substrate 110 may be a bar coating method using a doctor blade.

According to one embodiment of the present disclosure, the method for manufacturing the separator 100 for an electrochemical device includes a step (S50) of drying the slurry for a coating layer to form a coating layer 130. Specifically, the drying may be performed by drying with air at 50°C using a heat gun. By including the step (S50) of drying the slurry for a coating layer to form a coating layer 130 as described above, damage to the coating layer may be minimized, and the dispersion medium included in the slurry may be easily removed.

According to one embodiment of the present disclosure, the temperature of the drying process may be 25°C or more and 75°C or less. Specifically, the temperature of the drying process may be 30°C or more and 70°C or less, 35°C or more and 65°C or less, 40°C or more and 60°C or less, or 45°C or more and 55°C or less. By controlling the temperature of the drying process within the above-described range, the denaturation of the porous polymer substrate may be prevented, and the dispersion medium may be effectively removed.

According to one embodiment of the present disclosure, the drying process is performed for an appropriately set time so as to minimize the occurrence of surface defects on the coating layer 130. The drying may be performed using a drying auxiliary device such as a drying oven or hot air within an appropriate range.

According to one embodiment of the present disclosure, the separator 100 is interposed between an anode and a cathode and subjected to a lamination process of bonding by the application of heat and/or pressure, thereby manufacturing an electrochemical device.

In one embodiment of the present disclosure, the lamination process may be performed by a roll press device including a pair of pressure rollers. That is, the anode, the separator and the cathode may be sequentially stacked and placed between the pressure rollers to achieve interlayer bonding.

In one embodiment of the present disclosure, the lamination process may be performed by a hot pressing method.

One embodiment of the present disclosure provides an electrochemical device 1000 including: a cathode 300; an anode 500; and a separator 100 interposed between the cathode 300 and the anode 500.

The electrochemical device according to one embodiment of the present disclosure may have an improved lifespan and also have improved explosion safety by preventing explosion due to gas generation.

Fig. 5 is a schematic view of an electrochemical device according to one embodiment of the present disclosure. The electrochemical device according to one embodiment of the present disclosure will be described in detail with reference to Fig. 5.

According to one embodiment of the present disclosure, the amount of gas generated in the electrochemical device after heating at 130°C for 1 hour may be 7,000 $\mu$L or less. By controlling the amount of gas generated in the electrochemical device within the above-described range, the explosion safety of the electrochemical device may be improved, and the output and capacity retention rate may be improved.

According to one embodiment of the present disclosure, the resistance of the separator in the electrochemical device may be 90 $\Omega$ or less. Specifically, the resistance of the separator in the electrochemical device may be 50 $\Omega$ or more and 90 $\Omega$ or less, 70 $\Omega$ or more and 86 $\Omega$ or less, 72 $\Omega$ or more and 84 $\Omega$ or less, 73 $\Omega$ or more and 80 $\Omega$ or less, or 73 $\Omega$ or more and 74 $\Omega$ or less. By controlling the resistance of the separator within the above-described range, the amount of gas generated may be controlled, and the output and capacity retention rate of the electrochemical device may be improved.

According to one embodiment of the present disclosure, the capacity retention rate of the electrochemical device may be 80% or more. Specifically, the capacity retention rate of the electrochemical device may be 80% or more and less than 100%, 80% or more and 95% or less, 82% or more and 91% or less, or 85% or more and 88% or less. By controlling the amount of gas generated, the output of the electrochemical device may be improved.

In one embodiment of the present disclosure, the electrochemical device is a device that converts chemical energy into electrical energy through an electrochemical reaction, and may encompass a primary battery and a secondary battery.

In the present specification, the secondary battery is capable of charging and discharging, and may refer to a lithium secondary battery, a nickel-cadmium battery, a nickel-hydrogen battery, or the like.

In one embodiment of the present disclosure, the lithium secondary battery uses lithium ions as an ion conductor, and examples thereof include, but are not limited to, a non-aqueous electrolyte secondary battery including a liquid electrolyte, an all-solid-state battery including a solid electrolyte, a lithium polymer battery including a gel polymer electrolyte, and a lithium metal battery that uses lithium metal as an anode.

According to one embodiment of the present disclosure, the cathode may include: a cathode current collector; and a cathode active material layer provided on at least one surface of the cathode current collector and including a cathode active material, a conductive material, and a binder resin. The cathode active material may include one or a mixture of two or more selected from among layered compounds such as lithium manganese oxide ($LiMn_2O_4$, $LiMnO_2$, etc.), lithium cobalt oxide ($LiCoO_2$), lithium nickel oxide ($LiNiO_2$), and the like, or compounds substituted with one or more transition metals; lithium manganese oxides represented by the formula $Li_{1+x}Mn_{2-x}O_4$ (wherein x is 0 to 0.33), such as $LiMnO_3$, $LiMn_2O_3$, and $LiMnO_2$; lithium copper oxide ($Li_2CuO_2$); vanadium oxides such as $LiV_3O_8$, $LiV_3O_4$, $V_2O_5$, and $Cu_2V_2O_7$; Ni-site type lithium nickel oxides represented by the formula $LiNi_{1-x}M_xO_2$ (wherein M = Co, Mn, Al, Cu, Fe, Mg, B, or Ga, and x = 0.01 to 0.3); lithium manganese composite oxides represented by the formula $LiMn_{1-x}M_xO_2$ (wherein M = Co, Ni, Fe, Cr, Zn or Ta, and x = 0.01 to 0.1) or $Li_2Mn_3MO_8$ (wherein M = Fe, Co, Ni, Cu or Zn); $LiMn_2O_4$ in which a part of Li in the formula is substituted with an alkaline earth metal ion; disulfide compounds; and $Fe_2(MoO_4)_3$.

According to one embodiment of the present disclosure, the anode may include: an anode current collector; and an anode active material layer provided on at least one surface of the current collector and including an anode active material, a conductive material, and a binder resin. The anode may include, as the anode active material, one or a mixture of two or more selected from among lithium metal oxides; carbon materials such as non-graphitizable carbon and graphite-based carbon; metal composite oxides such as $LixFe_2O_3$ ($0 \leq x \leq 1$), $Li_xWO_2$ ($0 \leq x \leq 1$), and $Sn_xMe_{1-x}Me'_yO_z$ (Me = Mn, Fe, Pb, or Ge; Me' = Al, B, P, Si, an element of group 1, 2, or 3 of the periodic table, or halogen; $0 < x \leq 1$; $1 \leq y \leq 3$; $1 \leq z \leq 8$); lithium metal; lithium alloys; silicon-based alloys; tin-based alloys; metal oxides such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, and $Bi_2O_5$; conductive polymers such as polyacetylene; Li-Co-Ni-based materials; and titanium oxides.

According to one embodiment of the present disclosure, the conductive material may be, for example, any one or a mixture of two or more conductive materials selected from the group consisting of graphite, carbon black, carbon fibers or metal fibers, metal powder, conductive whiskers, conductive metal oxides, activated carbon, and polyphenylene derivatives. More specifically, the conductive material may be one or a mixture of two or more conductive materials selected from the group consisting of natural graphite, artificial graphite, super-p, acetylene black, Ketjen black, channel black, furnace black, lamp black, thermal black, Denka black, aluminum powder, nickel powder, zinc oxide, potassium titanate, and titanium oxide.

According to one embodiment of the present disclosure, the current collector is not particularly limited as long as it has high conductivity without causing a chemical change in the battery, and examples thereof include stainless steel, copper, aluminum, nickel, titanium, calcined carbon, and aluminum or stainless steel surface-treated with carbon, nickel, titanium, silver, or the like.

According to one embodiment of the present disclosure, a polymer commonly used in electrodes in the art may be used as the binder resin. Non-limiting examples of such a binder resin include, but are not limited to, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyacrylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxylmethyl cellulose.

According to one embodiment of the present disclosure, the cathode may include a cathode active material layer, and the coating layer of the separator may be in direct contact with the cathode active material layer.

According to one embodiment of the present disclosure, the coating layer may have reduced thermal shrinkage. Therefore, the minimum thermal shrinkage of the coating layer may help to completely maintain the physical state of the separator-cathode interface during thermal changes caused by charge and discharge cycles. Ultimately, this may improve electrochemical performance, such as battery capacity retention and cycle stability. Therefore, the stable separator-cathode interface may extend the lifespan of the electrochemical device, as realized by reduced mechanical stress and enhanced cycle stability.

According to one embodiment of the present disclosure, the anode may include an anode electrode active material layer, and the coating layer of the separator may be in direct contact with the anode active material layer.

The minimum thermal shrinkage of the coating layer may help to completely maintain the physical state of the separator-anode interface during thermal changes caused by charge-discharge cycles. Ultimately, this may improve electrochemical performance, such as battery capacity retention and cycle stability. Therefore, the stable separator-anode interface may extend the lifespan of the electrochemical device, as realized by reduced mechanical stress and enhanced cycle stability.

According to one embodiment of the present disclosure, a cathode slurry for forming the cathode active material layer may contain a dispersant, wherein the dispersant may be a pyrrolidone-based compound. Specifically, the dispersant may be N-methylpyrrolidone (ADC-01, LG Chemical Co., Ltd.).

According to one embodiment of the present disclosure, the content of the dispersant in the cathode slurry may be more than 0 parts by weight and 0.5 parts by weight or less based on 100 parts by weight of the cathode slurry. Specifically, the content of the dispersant in the cathode slurry may be more than 0.05 parts by weight and 0.4 parts by weight or less based on 100 parts by weight of the cathode slurry.

According to one embodiment of the present disclosure, an anode slurry for forming the anode active material layer may contain a dispersant, wherein the dispersant may be a polypyrrolidone-based compound. Specifically, the dispersant may be polyvinylpyrrolidone (Junsei Co., Ltd., Japan).

According to one embodiment of the present disclosure, the content of the dispersant in the anode slurry may be more than 0 parts by weight and 0.5 parts by weight or less based on 100 parts by weight of the anode slurry. Specifically, the content of the dispersant in the anode slurry may be more than 0.05 parts by weight and 0.4 parts by weight or less based on 100 parts by weight of the anode slurry.

According to one embodiment of the present disclosure, an electrochemical device prepared as described above may be placed in an appropriate case and an electrolyte may be injected thereinto, thereby manufacturing a battery.

According to one embodiment of the present disclosure, examples of the electrolyte include, but are not limited to, those in which a salt having a structure such as $A^+B^-$ (wherein $A^+$ includes an ion selected from the group consisting of alkali metal cations, such as $Li^+$, $Na^+$, and $K^+$, or combinations thereof, and $B^-$ includes an ion selected from the group consisting of anions, such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, and $C(CF_2SO_2)_3^-$, or

combinations thereof) is dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone), or mixtures thereof.

One embodiment of the present disclosure provides a battery module including, as a unit battery, a battery including the electrochemical device, a battery pack including the battery module, and a device including the battery pack as a power source. Specific examples of the device include, but are not limited to, power tools that are powered by a battery motor and moved; electric vehicles, including electric vehicles (EVs), hybrid electric vehicles (HEVs), and plug-in hybrid electric vehicles (PHEVs); electric two-wheeled vehicles, including electric bikes (E-bikes) and electric scooters (E-scooters); electric golf carts; and power storage systems.

**Mode for Invention**

Hereinafter, the present disclosure will be described in detail with reference to examples. However, the examples according to the present disclosure may be modified into various different forms, and the scope of the present disclosure should not be interpreted as being limited to the examples described below. The examples of the present specification are provided to more completely explain the present disclosure to those skilled in the art.

**<Example 1>**

Polyethylene resin (weight-average molecular weight: 900,000) was extruded and a porous polymer substrate (total thickness: about 9 $\mu$m, and porosity: 40 vol%) was manufactured therefrom using a wet method.

A slurry for a coating layer (solid concentration: 30 wt%) was prepared by adding 94.6 wt% of $BaTiO_3$ (average particle size: 2.0 $\mu$m, and grain size: 1.0 $\mu$m) as inorganic particles, 3 wt% of the acrylic binder styrene-butyl acrylate (glass transition temperature: 40°C) as a first polymer binder, and 2.4 wt% of polyacrylic acid as a dispersant to water as a solvent.

The slurry for a coating layer was applied to both sides of the porous polymer substrate by a bar coating method using a doctor blade, and dried with air at 50°C using a heat gun to form a coating layer with a thickness of 5 $\mu$m on each side, thereby manufacturing a separator with a total thickness of 14 $\mu$m.

**<Example 2>**

A separator was manufactured in the same manner as in Example 1, except that $BaTiO_3$ (particle size: 2.0 $\mu$m, grain size: 0.01 $\mu$m) was used as inorganic particles.

**<Example 3>**

A separator was manufactured in the same manner as in Example 1, except that $BaTiO_3$ (particle size: 2.0 $\mu$m, and grain size: 0.1 $\mu$m) was used as inorganic particles.

**<Example 4>**

A separator was manufactured in the same manner as in Example 1, except that $BaTiO_3$ (particle size: 2.0 $\mu$m, and grain size: 0.5 $\mu$m) was used as inorganic particles.

**<Example 5>**

A separator was manufactured in the same manner as in Example 1, except that $BaTiO_3$ (particle size: 2.0 $\mu$m, and grain size: 0.8 $\mu$m) was used as inorganic particles.

**<Example 6>**

A separator was manufactured in the same manner as in Example 1, except that $BaTiO_3$ (particle size: 2.0 $\mu$m, and grain size: 1.2 $\mu$m) was used as inorganic particles.

**<Example 7>**

A separator was manufactured in the same manner as in Example 1, except that $SrTiO_3$ (particle size: 2.0 $\mu$m, and grain size: 1.0 $\mu$m) was used as inorganic particles.

**<Example 8>**

A separator was manufactured in the same manner as in Example 1, except that $LiNdO_3$ (particle size: 2.0 $\mu$m, and grain size: 1.0 $\mu$m) was used as inorganic particles.

**<Example 9>**

A separator was manufactured in the same manner as in Example 1, except that $BaTiO_3$ (particle size: 2.0 $\mu$m, and grain size: 0.001 $\mu$m) was used as inorganic particles.

**<Example 10>**

A separator was manufactured in the same manner as in Example 1, except that $Al_2O_3$ (particle size: 2.0 $\mu$m, and grain size: 2.0 $\mu$m) was used as inorganic particles.

**<Comparative Example 1>**

A separator was manufactured in the same manner as in Example 1, except that $BaTiO_3$ (particle size: 2.0 $\mu$m, and grain size: 2.2 $\mu$m) was used as inorganic particles.

Table 1 below summarizes the types of inorganic particles used in Examples 1 to 10 and Comparative Example 1 and the particle sizes and grain sizes of the inorganic particles.

[Table 1]

|  | Type of inorganic particles | Particle size ($\mu$m) of inorganic particles | Grain size ($\mu$m) of inorganic particles |
|---|---|---|---|
| Example 1 | $BaTiO_3$ | 2.0 | 1.0 |
| Example 2 | $BaTiO_3$ | 2.0 | 0.01 |
| Example 3 | $BaTiO_3$ | 2.0 | 0.1 |
| Example 4 | $BaTiO_3$ | 2.0 | 0.5 |
| Example 5 | $BaTiO_3$ | 2.0 | 0.8 |
| Example 6 | $BaTiO_3$ | 2.0 | 1.2 |
| Example 7 | $SrTiO_3$ | 2.0 | 1.0 |
| Example 8 | $LiNdO_3$ | 2.0 | 1.0 |
| Example 9 | $BaTiO_3$ | 2.0 | 0.001 |
| Example 10 | $Al_2O_3$ | 2.0 | 2.0 |
| Comparative Example 1 | $BaTiO_3$ | 2.0 | 2.2 |

**<Manufacturing of Electrochemical Device>**

1) Manufacturing of Cathode

A cathode active material ($LiNi_{0.8}Mn_{0.1}Co_{0.1}O_2$), a conductive material (carbon black), a dispersant (N-methylpyrrolidone, ADC-01, LG Chemical Co., Ltd.), and a binder resin (a mixture of PVDF-HFP and PVDF) at a weight ratio of 97.5:0.7:0.14:1.66 were mixed with water, thereby preparing a slurry for a cathode active material layer in which the concentration of the components other than the water was 50 wt%. Next, the slurry was applied to the surface of an aluminum thin film (thickness: 10 $\mu$m) and dried, thereby manufacturing a cathode having a cathode active material layer (thickness: 120 $\mu$m).

2) Manufacturing of Anode

Graphite (a blend of natural graphite and artificial graphite), a conductive material (carbon black), a dispersant (polyvinylpyrrolidone, Junsei Co., Ltd., Japan), and a binder resin (a mixture of PVDF-HFP and PVDF) at a weight ratio of 97.5:0.7:0.14:1.66 were mixed with water, thereby preparing a slurry for an anode active material layer in which the concentration of the components other than the water was 50 wt%. Next, the slurry was applied to the surface of a copper thin film (thickness: 10 μm) and dried, thereby manufacturing an anode having an anode active material layer (thickness: 120 μm).

3) Lamination Process

The separator of each of Example 1 to 10 and Comparative Example 1 was interposed and stacked between the manufactured cathode and anode, and the stack was subjected to a lamination process to obtain an electrochemical device. The lamination process was performed using a hot press under the conditions of 70°C and 5.2 MPa for 10 seconds.

**<Experimental Example 1: Measurement of Dielectric Constant>**

For the inorganic particles used in each of Examples 1 to 10 and Comparative Example 1, samples were prepared by forming the inorganic particles into pellets having a diameter of 100 mm and a thickness of 4 mm using high-pressure compression molding. The dielectric constants of the samples were measured using ASTM D 150 - Standard Test Methods, and the results are summarized in Table 2 below.

**< Experimental Example 2: Measurement of Amount of Gas Generated>**

The amount of gas generated after storing the electrochemical device including the separator of each of Examples 1 to 10 and Comparative Example 1 at 72°C for 3 days was measured using gas chromatography, and the results are summarized in Table 2 below.

**<Experimental Example 3: Measurement of Resistance>**

For the electrochemical device including the separator of each of Examples 1 to 10 and Comparative Example 1, the electrochemical device at 25°C was charged with a constant current (CC) of 1C at a driving voltage of 2.5 V to 4.2 V in an SOC50 state, and the resistance was calculated from the voltage change that occurred for 10 seconds using Equation 1. The results are summarized in Table 2 below.

$$[Equation\ 1]$$

$$R = \Delta V / I$$

**<Experimental Example 4: Measurement of Capacity Retention Rate>**

The electrochemical device including the separator of each of Examples 1 to 10 and Comparative Example 1 was charged and discharged once at 0.1 C in the voltage range of 3.0 V to 4.4 V in a chamber at 45°C using an electrochemical charger/discharger, and then the lifespan characteristics were measured for 200 cycles while charging at 1.0 C and discharging at 1.0 C. At this time, for measurement of the lifespan characteristics, the ratio of the discharge capacity after 200 cycles to the discharge capacity at the first cycle was expressed as the capacity retention rate by calculation using Equation 2 below, and the results are summarized in Table 2 below.
The capacity retention rate was calculated using Equation 2 below.

Capacity retention rate (%) = (discharge capacity after 200 cycles/discharge capacity after first cycle) x 100     [Equation 2]

[Table 2]

|  | Dielectric constant | Amount of gas generated (μL) | Resistance (Ω) | Capacity retention rate (%) |
|---|---|---|---|---|
| Example 1 | 5,300 | 1, 014 | 71.2 | 92.4 |
| Example 2 | 60 | 3,345 | 85.4 | 85.4 |
| Example 3 | 500 | 2, 671 | 83.6 | 87.7 |

(continued)

|  | Dielectric constant | Amount of gas generated ($\mu$L) | Resistance ($\Omega$) | Capacity retention rate (%) |
|---|---|---|---|---|
| Example 4 | 2,300 | 1,736 | 77.6 | 89.3 |
| Example 5 | 4,100 | 1,299 | 73.3 | 90.8 |
| Example 6 | 1,500 | 2,236 | 79.9 | 88.1 |
| Example 7 | 7,000 | 899 | 72.2 | 90.8 |
| Example 8 | 6,200 | 957 | 73.1 | 89.8 |
| Example 9 | 40 | 3,027 | 84.3 | 86.7 |
| Example 10 | 9 | 8,237 | 98.9 | 77.5 |
| Comparative Example 1 | 1,400 | 10,748 | 86.0 | 75.0 |

Referring to Table 2 above, it was confirmed that, in Examples 1 to 10, in which the grain size of the inorganic particles was controlled within a specific range, the amount of gas generated was reduced and the capacity retention rate was high.

In contrast, it was confirmed that, in Comparative Example 1, which did not satisfy the grain size range of the inorganic particles, the amount of gas generated increased and the capacity retention rate was low.

According to the separator for an electrochemical device and the electrochemical device according to one embodiment of the present disclosure, it is possible to reduce gas generation during the operation of the electrochemical device by controlling the grain size of the inorganic particles, thereby improving the explosion safety of the electrochemical device.

[Description of reference numerals]

| | |
|---|---|
| 100: | separator for electrochemical device |
| 110: | porous polymer substrate |
| 130: | coating layer |
| 150: | adhesive layer |
| 300: | cathode |
| 500: | anode |
| 1000: | electrochemical device |

**Claims**

1.  A separator for an electrochemical device, comprising:

    a porous polymer substrate; and
    a coating layer provided on at least one side of the porous polymer substrate and comprising inorganic particles and a first polymer binder,
    wherein the inorganic particles have a grain size of 2 $\mu$m or less.

2.  The separator for an electrochemical device according to claim 1, wherein the inorganic particles have an average particle size of 0.1 $\mu$m or more and 10.0 $\mu$m or less.

3.  The separator for an electrochemical device according to claim 1, wherein the inorganic particles have a dielectric constant of 10 or more.

4.  The separator for an electrochemical device according to claim 1, wherein the inorganic particles comprise a metal oxide represented by Formula 1 below:

    [Formula 1]          $A_xB_yO_z$

wherein A is one selected from the group consisting of Ba, Sr, Pb, Bi, Na, K, Ca, Y, Gd, La, Li, or combinations thereof, B is one selected from the group consisting of Ti, Zr, Fe, Nb, Mn, Nb, Ta, or combinations thereof,

$$0 < x \leq 5,$$

$0 < y \leq 5$, and $0 < z \leq 5$.

5. The separator for an electrochemical device according to claim 1, wherein a content of the inorganic particles is 70 parts by weight or more based on 100 parts by weight of the coating layer.

6. The separator for an electrochemical device according to claim 1, wherein the first polymer binder is an acrylic resin.

7. The separator for an electrochemical device according to claim 1, further comprising, on at least a portion of the coating layer, an adhesive layer comprising a second polymer binder.

8. The separator for an electrochemical device according to claim 7, wherein the second polymer binder is in particle form.

9. An electrochemical device comprising: a cathode; an anode; and the separator of any one of claims 1 to 8 interposed between the cathode and the anode.

10. The electrochemical device according to claim 9, wherein an amount of gas generated after heating at 130°C for 1 hour is 7,000 $\mu$L or less.

[Fig. 1]

(a)                                                                100

|                  | ~130 |
|                  | ~110 |

(b)                                                                100

|                  | ~130 |
|                  | ~110 |
|                  | ~130 |

[Fig. 2]

[Fig. 3]

(a)                                                                        <u>100</u>

| | |
|---|---|
| | ~150 |
| | ~130 |
| | ~110 |

(b)                                                                        <u>100</u>

| | |
|---|---|
| | ~150 |
| | ~130 |
| | ~110 |
| | ~130 |
| | ~150 |

[Fig. 4]

(a)                                                                                    100

~150
~130
~110

(b)                                                                                    100

~150
~130
~110
~130
~150

[Fig. 5]

<u>1000</u>

300

100

500

**TRANSLATION**

## INTERNATIONAL SEARCH REPORT

| International application No. |
|---|
| **PCT/KR2025/095457** |

| A. | CLASSIFICATION OF SUBJECT MATTER |
|---|---|

**H01M 50/451**(2021.01)i; **H01M 50/431**(2021.01)i; **H01M 50/457**(2021.01)i; **H01M 50/42**(2021.01)i; **H01M 50/491**(2021.01)i

According to International Patent Classification (IPC) or to both national classification and IPC

| B. | FIELDS SEARCHED |
|---|---|

Minimum documentation searched (classification system followed by classification symbols)

H01M 50/451(2021.01); C01F 7/02(2006.01); C01F 7/06(2006.01); H01M 10/0525(2010.01); H01M 10/0568(2010.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 분리막(separator), 다공성(porous), 무기물 입자(inorganic particles), 코팅(coating), 크기(size)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0108430 A (SUMITOMO CHEMICAL CO., LTD.) 02 September 2021 (2021-09-02) paragraphs [0022]-[0111] and claims 1-9 | 1-2,5-6,9 |
| Y | | 3-4,7-8,10 |
| Y | KR 10-2016-0130716 A (LG CHEM, LTD.) 14 November 2016 (2016-11-14) paragraphs [0084]-[0135] and claims 1-9 | 3-4,10 |
| Y | KR 10-2016-0109669 A (SK INNOVATION CO., LTD.) 21 September 2016 (2016-09-21) claim 1 | 7-8 |
| A | KR 10-2014-0147416 A (LG CHEM, LTD.) 30 December 2014 (2014-12-30) claims 1-25 | 1-10 |
| A | KR 10-2015-0091973 A (SK INNOVATION CO., LTD.) 12 August 2015 (2015-08-12) claims 1-9 | 1-10 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 October 2025** | **21 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

**INTERNATIONAL SEARCH REPORT**
Information on patent family members

International application No.

**PCT/KR2025/095457**

| Patent document cited in search report | | | Publication date (day/month/year) | Patent family member(s) | | | Publication date (day/month/year) |
|---|---|---|---|---|---|---|---|
| KR | 10-2021-0108430 | A | 02 September 2021 | CN | 113272250 | A | 17 August 2021 |
| | | | | CN | 113272250 | B | 12 September 2023 |
| | | | | EP | 3878815 | A1 | 15 September 2021 |
| | | | | EP | 3878815 | A4 | 02 March 2022 |
| | | | | EP | 3878815 | B1 | 01 February 2023 |
| | | | | HU | E061973 | T2 | 28 September 2023 |
| | | | | JP | 2020-105031 | A | 09 July 2020 |
| | | | | JP | 6816094 | B2 | 20 January 2021 |
| | | | | KR | 10-2356572 | B1 | 08 February 2022 |
| | | | | PL | 3878815 | T3 | 15 May 2023 |
| | | | | US | 11990640 | B2 | 21 May 2024 |
| | | | | US | 2022-0077541 | A1 | 10 March 2022 |
| | | | | WO | 2020-138014 | A1 | 02 July 2020 |
| KR | 10-2016-0130716 | A | 14 November 2016 | KR | 10-2017239 | B1 | 02 September 2019 |
| KR | 10-2016-0109669 | A | 21 September 2016 | | None | | |
| KR | 10-2014-0147416 | A | 30 December 2014 | KR | 10-1792749 | B1 | 31 October 2017 |
| KR | 10-2015-0091973 | A | 12 August 2015 | | None | | |

Form PCT/ISA/210 (patent family annex) (July 2022)

**EP 4 769 785 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240104225